# EUROPEAN PATENT APPLICATION

(11) **EP 1 380 789 A1**
(43) Date of publication of application: **14.01.2004**
(21) Application number: 03014539.5
(22) Date of filing: 04.07.2003
(51) Int. Cl.: F16L 21/06, F16L 55/172

(54) **Connecting sleeve**

(30) Priority: 09.07.2002 IT VR20020073
(71) Applicant: Moretto Plastics Automation Srl, 35010 Massanzago (Padova) (IT)
(72) Inventor: Moretto, Renato, 35010 Massanzago (Padova) (IT)
(74) Representative: Reniero, Cirillo Silvano

(57) **Abstract**

Connecting sleeve comprising a pair of shells or halves (2 and 3), each having a pair of diametrically opposite longitudinal edges (4,5) one of which extends to form a respective protruding wing (6), securing means (9, 10) to removably clamp or lock a pair of wings (6) each integral with a respective halve (2, 3) arranged facing each other. At the longitudinal edge diametrically opposite to each wing (6) of each half (2 or 3) a toothing (7) is provided having a reverse mirror symmetrical shape. The tips of the teeth are widened and the bottom of the recesses between adjacent teeth is correspondingly undercut so as to allow said two edges (5) to be removably joint coupled together.

## Description

The present invention relates to a connecting sleeve for removably connecting two sections having the same outer shape, more particularly two tubular sections having the same outer dimensions or diameter.

As known, sleeves have been proposed which are provided either with preshaped hose clamps provided with rigid end wings, designed to be fixed to each other, typically by one or more bolts, or with two shells or halves, each provided with two diametrically opposite wings each designed to be fixed to a respective wing of the other shell or half by means of one or more bolts. Although satisfactory from many points of view, such prior art sleeves have limitations and drawbacks owing to high production cost in the former case, and the laboriousness in the manoeuvres required to install them, in the other.

A main object of the present invention is to provide a connecting sleeve suitable for eliminating or significantly reducing the drawbacks mentioned above in connection with the state of the art.

Another object of the present invention is to provide a connecting sleeve whose main components are designed to be manufactured from one mould.

Another object of the present invention is to provide a connecting sleeve which is highly reliable and user-friendly.

These and other objects that will become better apparent below are attained by a connecting sleeve to be applied between a pair of sections to be removably joined, according to the present invention, which comprises a pair of shell-like elements, each having a pair of opposite longitudinal edges, a projecting wing at one edge of each shell-like element, securing means arranged to removably clamp a pair of mutually facing wings of said pair of shell-like elements, and is characterised in that engaging joint means is provided at the longitudinal edge opposite to said wing of each shell-like element , thereby allowing said two edges to be removably joint coupled together.

Advantageously, said engaging joint means comprises at least a sequence of teeth with recesses therebetween, the tips of said teeth being widened and the bottom of said recesses being correspondingly undercut.

Further features and advantages of the present invention will be better apparent from the following detailed description of a preferred but not exclusive embodiment of a connecting sleeve shown by way of not limiting example in the accompanying drawings, in which:
Figure 1 is a perspective view, slightly from above, of a connecting sleeve according to the present invention, shown in its clamped or locked condition;
Figure 2 shows a longitudinal section view of the sleeve taken along line ll-ll of Fig. 1;
Figure 3 shows a top view of a half of the connecting sleeve shown in Fig. 1; and
Figure 4 is a bottom view of the toothed portion of the half sleeve shown in Fig. 3.

With reference to the above listed Figures, it will be noted that a connecting sleeve according to the present invention generally designated at 1 is formed with a pair of halves or shell-like elements 2 and 3, each having a diametrically opposite pair of longitudinal edges 4 and 5. A projecting wing 6 extends along one edge, e.g. that indicated at 4, , that, in the shown embodiment extends throughout the entire length of its respective half and terminates with its longitudinal end bent for stiffening purposes. At the other longitudinal edge, i.e. that designated at 5, of each half, a toothing 7 is formed with teeth 8 each having a respective widened tip , the teeth being separated from one another by undercut recesses arranged according to a reverse mirror image symmetry.

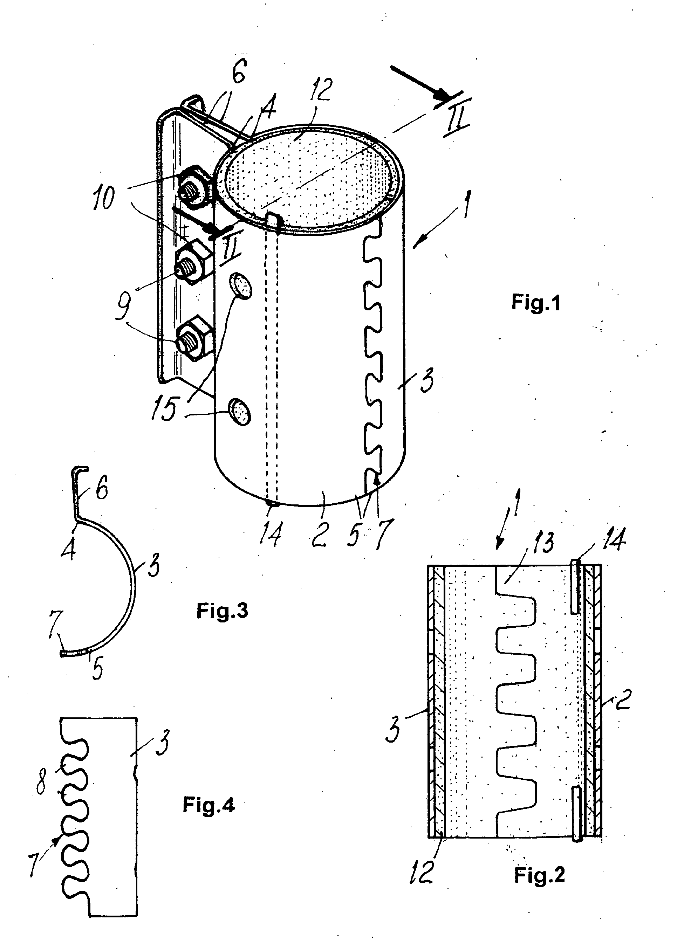

In this a way, one shell 2 or 3 obtained from one mould can become, after being overturning, a half 3 or 2, respectively, so as to be able to be removably joint coupled at respective toothings 7 (Fig. 1).

Of course, the widened tip shape of the teeth and undercut bottom of the recesses between adjacent teeth can have several shapes, e.g. it can be substantially Y shaped, as shown in Figures 1 to 3, or else T-shaped, Ω-shaped or the like.

Wings 6 can be clamped or locked together by any suitable locking means, e.g. one or more bolts 9 with respective nuts 10, fitted into corresponding holes formed in wings 6.

A sealing means or gasket 12 , which is made of a suitable sealing material, e.g. rubber, can be preferably inserted into the sleeve 1 and comprises a band with complementary toothed ends 13, e.g. with teeth having truncated tips. With this structure, the gasket 12 can be either fitted either in advance at the joint around which the sleeve 1 is applied, or directly into sleeve 1, by causing the whole assembly to slide to such an extent that the gasket and the sleeve are brought around the connection between two abutting sections, e.g. tubular sections, to be removably joint coupled.

Preferably, gasket 12 extends so as to cover the whole annular inner surface delimited by the shell-like elements 2 and 3.

If desired, a thin metal band 14 can be provided, which is designed to provide metal continuity between the pair of connected sections in order to make it possible to connect to earth the whole structure such as a silo support frame, obtained by connecting a plurality of (tubular) sections.

The invention described above is susceptible to various modifications and variations within its scope as defined by the Claims.

Thus, e.g. halves 2 and 3 can be formed with one or more centring through-openings 15.

Moreover, the halves or shells, if made of metal, particularly steel, can also be manufactured by moulding in subsequent steps by using one mould, whereas if they are made of a plastics material, they can be manufactured by means of a thermoforming or an injection process.

## Claims

1. A connecting sleeve to applied between a pair of sections to be removably joint together, comprising a pair of half-like or shell-like elements (2,3) each having a pair of opposite longitudinal edges (4, 5), a projecting wing (6) at one edge of each shell-like element (2, 3), securing means (9, 10) arranged to removably lock or clamp a pair of mutually facing wings (6) of said pair of shell-like elements (2, 3), and is **characterised in that** engaging joint means (7) is provided at the longitudinal edge opposite to said wing (6) of each shell-like element (2, 3), thereby allowing said two edges (4, 5) to be removably joint coupled together.

2. A connecting sleeve as claimed in claim 1, **characterised in that** said joint coupling engagement means comprises at least one sequence of teeth (8) with recesses therebetween, the tips of said teeth (8), and the bottom of said recesses being correspondingly being widened.

3. A connecting sleeve as claimed in claim 2, **characterised in that** each sequence of teeth (8) and recesses in a shell-like element of said pair of shell-like elements (2, 3) is arranged with a reverse mirror image symmetry with respect to the respective sequence of recesses and teeth formed in the other shell-like element.

4. A connecting sleeve as claimed in any preceding claim, **characterised in that** said securing means comprises at least one bolt (9).

5. A connecting sleeve as claimed in any preceding claim, **characterised in that** it comprises at least one gasket (12) comprising at least one band having complimentary toothed ends (13) thereby forming, in use, a closed loop element.

6. A connecting sleeve as claimed in any preceding claim, **characterised in that** said gasket (12) extends to cover the whole inner surface delimited by said shell-like elements (2 and 3).

7. A connecting sleeve as claimed in any preceding claim, **characterised in that** it comprises at least one metal band (14) designed to form metal continuity between said pair of connected sections.

8. A connecting sleeve as claimed in any preceding claim, **characterised in that** said shell-like elements (2 and 3) are formed with one or more centring through-openings (15).
